# EUROPEAN PATENT SPECIFICATION

(11) **EP 3 013 103 B1**
(45) Date of publication and mention of the grant of the patent: **09.08.2017**
(21) Application number: 14813731.8
(22) Date of filing: 19.06.2014
(51) Int. Cl.: H04W 52/04, H04W 52/24, H04W 52/14

(54) **WCDMA ADJACENT CELL INTERFERENCE CONTROL METHOD, DEVICE AND WCDMA SYSTEM**
WCDMA-NACHBARZELLEN-INTERFERENZSTEUERUNGSVERFAHREN UND -VORRICHTUNG SOWIE WCDMA-SYSTEM
PROCÉDÉ DE LIMITATION DE BROUILLAGE DE CELLULE ADJACENTE WCDMA, DISPOSITIF ET SYSTÈME WCDMA

(30) Priority: 20.06.2013 CN 201310246690
(43) Date of publication of application: 27.04.2016
(73) Proprietor: ZTE Corporation, Shenzhen City, Guangdong Province 518057 (CN)
(72) Inventor: LI, Ling, Shenzhen Guangdong 518057 (CN); ZHAN, Jianming, Shenzhen Guangdong 518057 (CN); WANG, Chen, Shenzhen Guangdong 518057 (CN)
(74) Representative: Lavoix
(86) International application number: PCT/CN2014/080301
(87) International publication number: WO 2014/202014

(56) References cited:
- EP-A2- 1 734 780
- CN-A- 101 282 566
- CN-A- 101 686 550
- CN-A- 102 868 503
- US-A1- 2009 270 109

## Description

### TECHNICAL FIELD

The disclosure relates to a communications technology, particularly to a Wideband Code Division Multiple Access (WCDMA) adjacent cell interference control method, device and a WCDMA system.

### BACKGROUND

At present, wireless communication systems that have been widely applied include: a Global system for Mobile Communication (GSM), a WCDMA system, a Code Division Multiple Access 2000 (CDMA2000) system, a Time Division-Synchronous Code Division Multiple Access (TD-SCDMA) system, a Worldwide Interoperability for Microwave Access (Wimax) system, a Long-Term Evolution (LTE) system and so on. In the architectures of the wireless communications systems, an inherent problem of the systems is inter-cell interference, which seriously affects system performance, and inter-cell interference is mainly caused by mutual interference between User Equipments (UE) using the same frequency resource in each cell. Serious cell interference will directly affect the coverage and capacity of the systems, and will directly result in frequent network disconnection or failures in accessing networks especially for cell edge UEs. It is an important objective to reduce inter-cell interference in design of a wireless communication system.

Usually, it is necessary to consider interference from an adjacent cell and control of the interference of the adjacent cell during conventional WCDMA uplink processing. For example, a Relative Grant (RG) DOWN command will be sent to a UE of a non-serving Enhanced Dedicated Channel (E-DCH) when the following two conditions are satisfied during scheduling of a High Speed Uplink Packet Access (HSUPA) service:
1) Received Total Wideband Power (RTWP) of a current cell exceeds target RTWP configured by a Radio Network Controller (RNC); and
2) a non-serving E-DCH to total E-DCH power ratio exceeds a target value configured by the RNC.

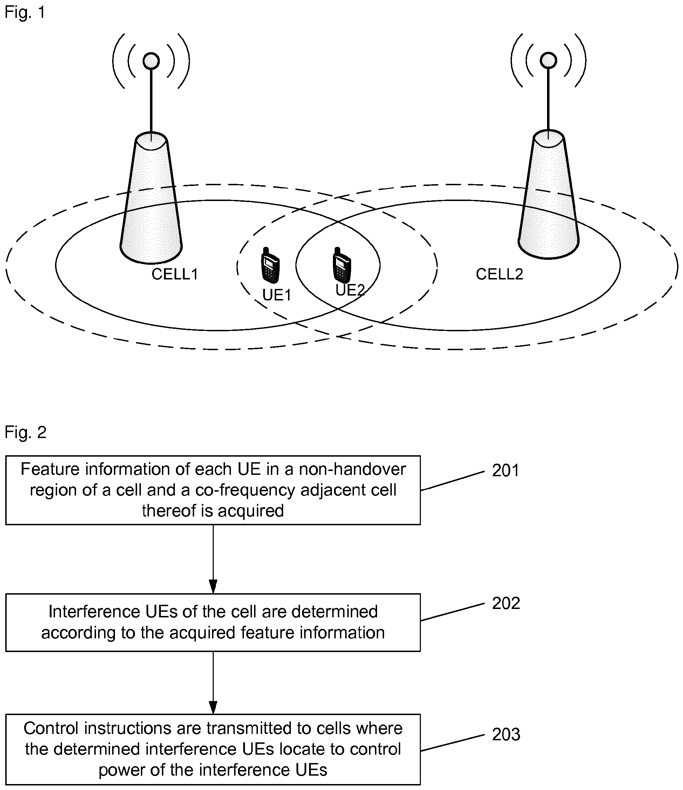

However, such a method can only control a UE of a non-serving E-DCH in an E-DCH active set (the active set is a set of cells having an E-DCH bearer with the UE), but cannot control a UE not in the E-DCH active set while the boundary of uplink coverage of a cell of a base station is generally greater than the boundary of downlink coverage during practical network deployment. Referring to Fig. 1, UE1 locates in a soft-handover region and UE2 does not locate in the soft-handover region while the strength of a downlink signal is measured based on a UE so as to determine whether an active set is added during a soft handover process, thus UE2 which is within uplink coverage of a cell, but is not within downlink coverage of the cell may fail to use an RG DOWN command delivered by a non-serving E-DCH to control uplink interference. Even if the triggering of the addition of the active set can be judged according to the strength of the uplink signal, a signal of an Enhanced Relative Grant Channel (E-RGCH) of the non-serving E-DCH cannot be transmitted to UE2. This is because UE2 which is beyond the boundary of the downlink coverage receives a poor signal of an RG command of the E-RGCH to result in an error of a demodulated RG command, the uplink power of UE2 can be hardly controlled, and the uplink load capacity of a serving E-DCH cannot be utilized to the largest extent.

According to US 2009/270109 A1, a cellular radio communication system includes a first serving cell and a second non-serving cell. A mobile radio is currently served by a first base station in the first cell. An uplink radio transmission from the mobile radio will cause or causes inter-cell interference in the second non-serving cell. Accordingly, an estimate is made of the inter-cell interference in the second non-serving cell associated with the mobile radio's uplink transmission. If the estimated inter-cell interference in the second non-serving cell exceeds a predetermined threshold, then control is performed so that the inter-cell interference in the second non-serving cell is limited, e.g., by managing radio resources so that the estimated inter-cell interference in the second non-serving cell is or becomes less than the predetermined threshold.

According to EP 1 734 780 A2, disclosed is a mobile terminal transmission scheduling method for a mobile communication system. In each cell of this system, adjustment regions are provided externally adjacent to a soft-hand-over region. A mobile terminal (MT), upon entering this adjustment region, transmits an adjustment region scheduling request to a radio network controller (RNC) via a base station (BS) to which the MT currently belongs. The RNC transmits a scheduling adjustment start request to this BS. Upon receiving this request, this BS moves to an adjustment scheduling operating state and adjusts a scheduling control signal internally generated in the BS. The MT, upon exiting this adjustment region, transmits an adjustment region scheduling release request to the RNC via a BS to which the MT currently belongs. The RNC transmits a scheduling adjustment end request to this BS. Upon receiving this end request, this BS returns to a normal scheduling operating state.

According to CN 101 282 566 A, the invention discloses an interference suppression method, interacting the interference suppression information by each cell base station and a main control module; the main control module obtains the main interference terminal information of each cell; the main control module aggregates the interference terminal information of each cell, or can add loading information, recommends an interference suppression dispatching method, sends to the corresponding cell base station; each cell base station combines with the dispatching requirement of the cell to dispatch according to the interference suppression dispatching method recommended by the main control module, to reach the aim of restraining or eliminating synchronous interference. The interference suppression method provided by the invention can reduce the co-channel interference in the wireless communication system effectively, improve the spectrum efficiency and further increase system coverage and flow rate.

According to CN 101 686 550 A, the embodiment of the invention discloses an inter-cell interference suppression method, a system and base station and a user terminal, relating to communication filed. The invention solves the problem of too much network communication resource occupation caused by a great amount of scheduling information required to be transported among cell base stations. The inter-cell interference suppression method comprises the following steps: determining an interference cell; acquiring the scheduling information of an interference terminal meeting a terminal constraint condition in the interference cell; and carrying out interference suppression operation on user terminals meeting the terminal constraint condition in the original cell according to the scheduling information of the interference terminal. The technical scheme provided by the embodiment of the invention can be applied in 3G network and next generation wireless network.

### SUMMARY

Embodiments of the disclosure provide a WCDMA adjacent cell interference control method, device and a WCDMA system, so as to solve the problem that interference of a UE beyond the boundary of downlink coverage of a cell to the cell cannot be controlled in a WCDMA system.

The features of the method and device according to the present disclosure are defined in the independent claims, and the preferable features according to the present invention are defined in the dependent claims.

In an embodiment of the disclosure, feature information of each UE in a non-handover region (a region beyond the boundary of downlink coverage of the cell) of a target cell and a co-frequency adjacent cell of the target cell is acquired first, interference UEs of the target cell are determined according to the acquired feature information, and control instructions are transmitted to cells in which these interference UEs locate to control the power of these interference UEs, thus interference caused by these interference UEs locating beyond the boundary of the downlink coverage to the target cell is controlled, system performance is improved while the satisfaction of user experience is improved.

### BRIEF DESCRIPTION OF THE DRAWINGS

Fig. 1 is a schematic diagram of uplink interference of a UE in an adjacent cell to a target cell;
Fig. 2 is a flowchart of a WCDMA adjacent cell interference control method according to a first embodiment of the disclosure;
Fig. 3 is a schematic diagram of a non-handover region of a target cell and a co-frequency adjacent cell thereof according to a first embodiment of the disclosure;
Fig. 4 is a first schematic diagram of uplink interference of a UE to a target cell according to a second embodiment of the disclosure;
Fig. 5 is a flowchart of controlling the UE as shown in Fig. 4;
Fig. 6 is a second schematic diagram of uplink interference of a UE to a target cell according to the second embodiment of the disclosure;
Fig. 7 is a flowchart of controlling the UE as shown in Fig. 6;
Fig. 8a is a first structural diagram of an RNC according to a third embodiment of the disclosure;
Fig. 8b is a second structural diagram of the RNC according to the third embodiment of the disclosure;
Fig. 9a is a structural diagram of a first base station according to a fourth embodiment of the disclosure; and
Fig. 9b is a structural diagram of a second determining unit of the first base station according to the fourth embodiment of the disclosure.

### DETAILED DESCRIPTION

The disclosure will be further expounded hereinafter through specific embodiments and with reference to the accompanying drawings.

### Embodiment 1

Referring to Fig. 2, a WCDMA adjacent cell interference control method in the embodiment includes the following steps.

Step 201: Feature information of each UE in a non-handover region of a cell (hereinafter referred to as a target cell in order to facilitate description) and a co-frequency adjacent cell thereof is acquired.

Step 202: Interference UEs of the target cell are determined according to the acquired feature information.

Step 203: Control instructions are transmitted to cells where the determined interference UEs locate to control power of the interference UEs, thus controlling interference of the interference UEs to the target cell.

The interference of the interference UEs beyond the boundary of downlink coverage of the target cell to the target cell can be controlled effectively by means of the steps above, thereby improving system performance.

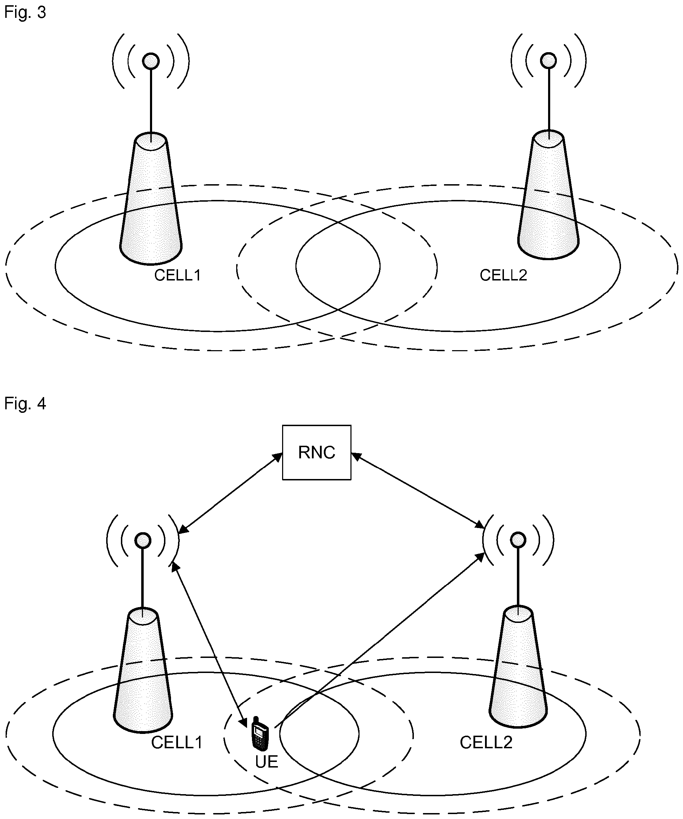

Referring to Fig. 3, the non-handover region of the target cell and the co-frequency adjacent cell thereof in the embodiment is a region between the boundary of uplink coverage and the boundary of downlink coverage of an adjacent cell CELL1 besides a part overlapped with a downlink coverage region of a target cell CELL2.

In the embodiment, a specific implementation method of acquiring the feature information of each UE in the non-handover region of the cell and the co-frequency adjacent cell thereof in above step 201 may be selected and set according to a specific application scenario. The following description only illustrates several specific implementation methods as examples, but it should be understood that specific implementation methods are not limited to the following methods only.

In the first method, each UE in the non-handover region is determined according to a CQI of the UE in the co-frequency adjacent cell of the target cell, and then feature information of each UE determined to be located in the non-handover region is acquired.

Generally, a HSUPA service will be accompanied with a High Speed Downlink Packet Access (HSDPA) channel. The sizes of HSDPA CQIs are compared, UEs having a relatively small CQI are determined as UEs in the non-handover region, feature information of these UEs is acquired, and the acquired feature information is transmitted to the target cell. UEs having a relatively large CQI are determined to be UEs not in the non-handover region, because users having a large CQI are usually close to a centre of the cell and have little interference to other cells. The sizes of the CQIs here may be determined according to a preset CQI threshold. When a CQI is smaller than the CQI threshold, it is determined that the CQI is small. When a CQI is greater than or equal to the CQI threshold, it is determined that the CQI is large. All UEs in the non-handover region which is the region between the boundary of the uplink coverage and the boundary of the downlink coverage of the adjacent cell CELL1 of the co-frequency adjacent cell may be obtained by using this method. Subsequently, UEs in the downlink coverage region of the target cell are removed from these UEs, and the remaining UEs are UEs in the non-handover region of the target cell and the co-frequency cell thereof. In the embodiment, the target cell may compare information (feature information such as a scrambling code) of each UE to determine the UEs in the downlink coverage region of the target cell and then removes these UEs. In the meanwhile, UEs that need to be searched may be reduced as many as possible through this method to avoid too much search of uplink resources and application of too many interactions of control signalings, thereby effectively monitoring all UEs having uplink interference in the co-frequency adjacent cell.

In the second method, each UE in the non-handover region is determined according to downlink signal strength information reported by the UE when entering the co-frequency adjacent cell of the target cell, and then feature information of each UE determined to be located in the non-handover region is acquired. A method of reporting the downlink signal strength information will be described as an example so as to facilitate understanding.

When entering a cell, a UE will report an event EVENT 1 E. It may be determined according to the event that the UE is in the range of the cell. Since the event EVENT 1 E is measured based on the strength of a downlink signal, an absolute threshold of the event EVENT 1 E may be set so as to monitor a UE out of a handover region of a target cell and a co-frequency adjacent cell thereof. In order to thoroughly monitor uplink interference brought by a UE in an uplink coverage region, a threshold value may be set low enough for the strength of the downlink signal that triggers the event EVENT 1 E, so that all UEs in the adjacent cell can trigger the event EVENT 1 E so as to report downlink signal strength information in the adjacent cell. All UEs in the non-handover region which is a region between the boundary of the uplink coverage and the boundary of the downlink coverage of the co-frequency cell CELL1 of the co-frequency adjacent cell may be obtained by using this method. Subsequently, UEs in the downlink coverage region of the target cell are removed from these UEs and the remaining UEs are UEs in the non-handover region of the target cell and the co-frequency cell thereof. In the embodiment, the target cell may compare information (feature information such as a scrambling code) of each UE to determine UEs in the downlink coverage region of the target cell and then removes these UEs.

In the third method, the first method and the second method may be combined to perform the determination. For example, a list of UEs in the non-handover region may be determined by the first method and the second method respectively, and then a union or an intersection of the two is applied and so on.

In the embodiment, a method for determining the interference UEs of the target cell according to the acquired feature information may be also selected according to a practical application scenario. For example:
all UEs in the non-handover region are used as the interference UEs of the target cell. At the moment, the uplink transmission power of each UE in the non-handover region in the target cell is acquired according to the acquired feature information, and the uplink transmission power of all UEs in the non-handover region is used as the interference power of the target cell. In the embodiment, feature information of a UE in may specifically include an uplink scrambling code, a time slot format, UE identification information, and so on.

For another example, UEs satisfying a certain preset condition in the non-handover region are used as the interference UEs of the target cell. In other words, these UEs are screened according to a certain screening condition, thus reducing the number of UEs controlled later. For example, the uplink transmission power of each UE in the non-handover region in the target cell may be acquired according to the acquired feature information, and the uplink transmission power of UEs having uplink transmission power (such as the uplink power of a Dedicated Physical Control Channel (DPCCH)) greater than an preset uplink transmission power threshold, and/or of UEs having a pilot SIR (such as a pilot SIR of a DPCCH) greater than a preset pilot SIR threshold in the target cell is used as the interference power of the target cell, and UEs having uplink transmission power greater than the preset uplink transmission power threshold, and/or UEs having a pilot SIR greater than the preset pilot SIR threshold in the target cell are determined as the interference UEs of the target cell, while UEs in the non-handover region, which fail to satisfy the conditions above, are not used as interference UEs of the target cell, because these UEs may have little interference to the target cell.

After the interference UEs of the target cell are determined, the target cell may transmit control instructions to the cells where the interference UEs locate to control the power of the interference UEs, thus controlling interference of the interference UEs to the target cell. In the embodiment, it may be set that control instructions for reducing the uplink transmission power of the UEs are transmitted to the cells where the these interference UEs locate only when a current load of the target cell is greater than a preset load threshold, and/or the proportion of the interference power of each interference UE is greater than a preset interference proportion threshold, so as to ensure that the interference UEs may work normally in the cells where the interference UEs locate. In the embodiment, the control instructions for reducing the uplink transmission power of the UEs may include at least one of instructions for reducing an RG of the UEs, instructions for reducing an absolute grant of the UEs and instructions for reducing an uplink data rate of the UEs. In other words, the uplink transmission power of the UEs may be reduced by at least one method of reducing an RG of the UEs, reducing an absolute grant of the UEs or reducing an uplink data rate of the UEs according to a specific application scenario, thereby reducing the interference of the UEs to the target cell.

### Embodiment 2

The disclosure will be further described hereinafter in combination with a WCDMA system so as to better understand the disclosure.

The WCDMA system in the embodiment includes an RNC and a first base station, wherein
the RNC is configured to acquire feature information of each UE in a non-handover region of a cell (a target cell) where the first base station locates and a co-frequency adjacent cell of the cell, and transmit the acquired feature information to the first base station;
the first base station is configured to determine, according to the acquired feature information and the method above, interference UEs of the cell where the first base station locates, and transmit, according to the method above, control instructions to cells where the interference UEs locate to control power of the interference UEs. The disclosure will be further described in combination with several specific application scenarios as examples.

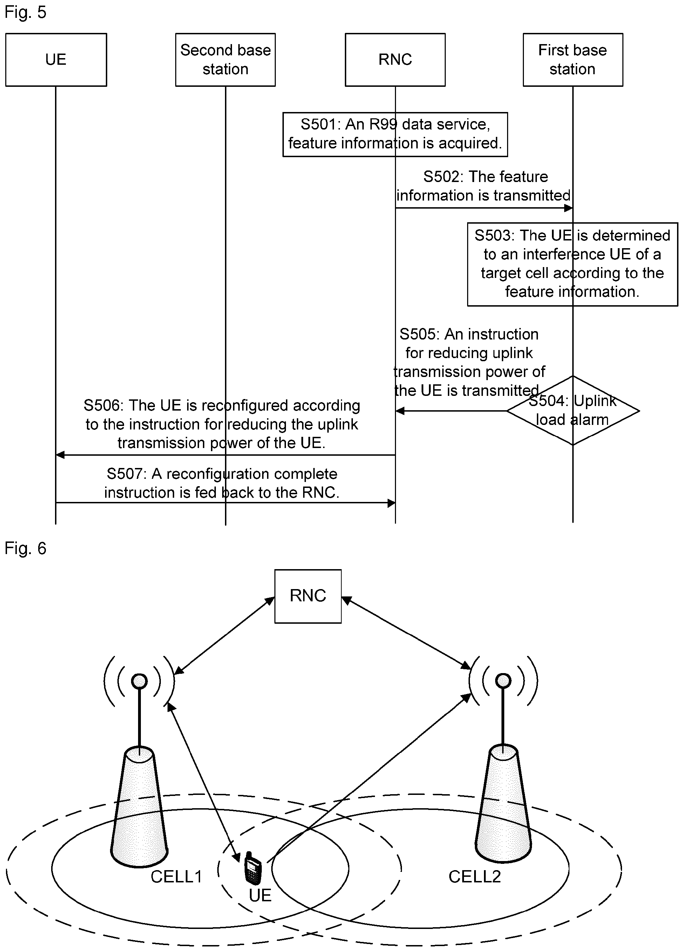

Referring to Fig. 4, a WCDMA system as shown in the figure includes an RNC, a second base station, and a first base station. A cell where the second base station locates is a CELL1, and a cell where the first base station locates is a CELL2. It is set that the CELL2 is a target cell and the CELL1 is a co-frequency adjacent cell of the target cell. A UE, i.e., an interference UE of the target cell, exists in a non-handover region of the target cell CELL2 and the co-frequency adjacent cell CELL1 thereof. The UE executes an R99 data service in the CELL1. At the moment, a process for controlling the power of the UE is as shown in Fig. 5, including the following steps.
Step 501: When the UE enters the CELL1, the RNC acquires feature information of the UE according to the method above.
Step 502: The RNC transmits the acquired feature information to the first base station.
Step 503: The first base station determines that the UE is an interference UE of the target cell (the cell to which the first base station belongs) according to the acquired feature information.
Step 504: The first base station judges whether an uplink load alarm occurs. If so, step 505 is performed. Otherwise, the judgment is continued according to a practical condition.
Step 505: A control instruction for reducing uplink transmission power of the UE is transmitted to the RNC. The transmitted control instruction for reducing the uplink transmission power of the UE in the embodiment may be an instruction for reducing an uplink data rate of the UE.
Step 506: The RNC reconfigures the UE according to the instruction for reducing the uplink data rate of the UE, so as to reduce the uplink data rate of the UE.
Step 507: The UE feeds back a reconfiguration complete instruction to the RNC.

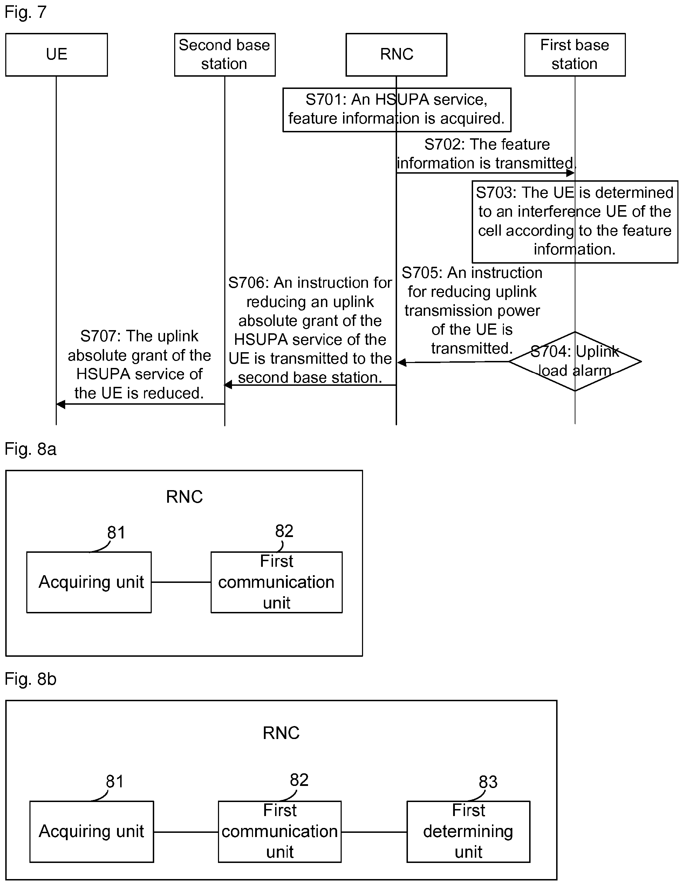

Referring to Fig. 6, a WCDMA system as shown in Fig. 6 also includes an RNC, a second base station, and a first base station. A cell where the second base station locates is a CELL1, and a cell where the first base station locates is a CELL2. It is set that the CELL2 is a target cell and the CELL1 is a co-frequency adjacent cell of the target cell. A UE (i.e., an interference UE of the target cell) exists in a non-handover region of the target cell CELL2 and the co-frequency adjacent cell CELL1 thereof. The UE executes an HSUPA service in the CELL1. At the moment, a process for controlling the power of the UE is as shown in Fig. 7, including the following steps.
Step 701: When the UE enters the CELL1, the RNC acquires feature information of the UE according to the method above.
Step 702: The RNC transmits the acquired feature information to the first base station.
Step 703: The first base station determines that the UE is an interference UE of the target cell according to the acquired feature information.
Step 704: The first base station judges whether an uplink load alarm occurs. If so, step 705 is performed. Otherwise, the judgment may be continued according to a practical condition, and so on.
Step 705: A control instruction for reducing uplink transmission power of the UE is transmitted to the RNC.
   The transmitted control instruction for reducing the uplink transmission power of the UE in the embodiment may include at least one of an instruction for reducing an RG of the UE, an instruction for reducing an absolute grant of the UE and an instruction for reducing an uplink data rate of the UE. The embodiment illustrates the instruction for reducing the absolute grant of the UE as an example.
Step 706: The RNC transmits to the second base station, according to the instruction for reducing the absolute grant of the UE, an instruction for reducing an uplink absolute grant of the HSUPA service of the UE.
Step 707: The second base station reduces the uplink absolute grant of the HSUPA service of the UE.

### Embodiment 3

The embodiment records an RNC, as shown in Fig. 8a and including:
an acquiring unit 81, configured to acquire feature information of each UE in a non-handover region of a target cell; and
a first communication unit 82, configured to transmit the acquired feature information to a first base station, wherein the target cell is a cell where the first base station locates.

As a method, as shown in Fig. 8b and based on Fig. 8a, the RNC may further include:
a first determining unit 83, configured to determine each UE in the non-handover region according to a CQI in the co-frequency adjacent cell of the target cell; and/or,
to determine each UE in the non-handover region according to downlink signal strength information from the co-frequency adjacent cell of the target cell;
the acquiring unit 81 is further configured to acquire feature information of each UE determined to be located in the non-handover region.

In practical application, the acquiring unit 81 and the first determining unit 83 may be implemented by Central Processing Units (CPU), Digital Signal Processors (DSP), or Field Programmable Gate Arrays (FPGA) of the RNC and the first communication unit 82 may be implemented by a transmitter of the RNC.

### Embodiment 4

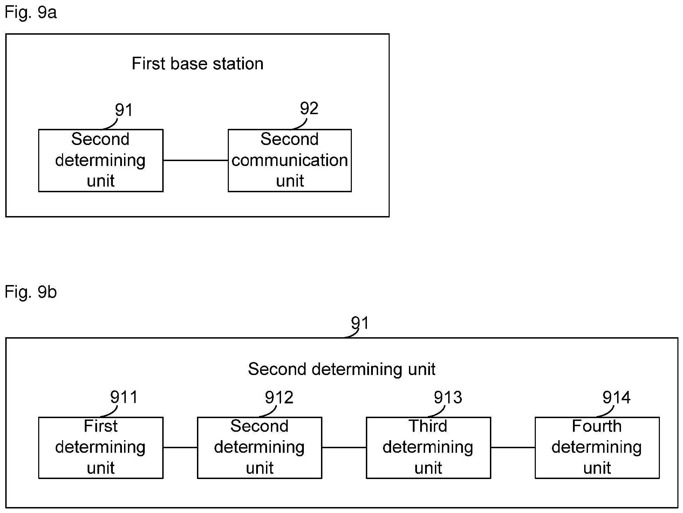

The embodiment records a first base station, as shown in Fig. 9a, including:
a second determining unit 91, configured to determine interference UEs of a cell according to feature information;
a second communication unit 92, configured to transmit control instructions to cells where the interference UEs locate to control the power of the interference UEs.

As an embodiment, as shown in Fig. 9b, the second determining unit 91 may include:
a first determining module 911, a second determining module 912, a third determining module 913 and a fourth determining module 914; wherein
the first determining module 911 is configured to acquire uplink transmission power of each UE in a non-handover region in a target cell according to the feature information;
the second determining module 912 is configured to use the uplink transmission power of all UEs as interference power of the cell, and trigger the third determining module 913; or to acquire the uplink transmission power of each UE in the non-handover region in the target cell according to the feature information, determine uplink transmission power greater than a preset uplink transmission power threshold in the acquired uplink transmission power, and/or uplink transmission power of UEs having a pilot SIR greater than a preset pilot SIR threshold in the target cell as the interference power of the target cell, and trigger the fourth determining module 914;
the third determining module 913 is configured to determine all UEs in the non-handover region as the interference UEs of the cell; and
the fourth determining module 914 is configured to determine UEs having uplink transmission power greater than the preset uplink transmission power threshold, and/or UEs having a pilot SIR greater than the preset pilot SIR threshold in the target cell as the interference UEs of the target cell.

As an embodiment, the second communication unit 92 is further configured, when a current load of the target cell is greater than a preset load threshold, and/or the proportion of the interference power of the target cell is greater than a preset interference proportion threshold, to transmit a control instruction for reducing the uplink transmission power of the UEs to a second base station corresponding to the cells where the interference UEs locate.

In practical application, the second determining unit 91 may be implemented by a CPU, a DSP or an FPGA of the first base station and the second communication unit 92 may be implemented by a transmitter in the first base station.

To sum up, the problem of influence of inter-cell interference on system performance may be solved effectively by using the solutions according to the embodiments of the disclosure, thus improving satisfaction of user experience.

Those of ordinary skill in the art may understand that all or part of the steps of the method embodiments may be implemented by related hardware instructed by a program. The program may be stored in a computer-readable storage medium. When being executed, the program performs the steps in the method embodiments. The storage medium includes various mediums that may store the program codes, including a mobile storage device, a Random Access Memory (RAM), a Read-Only Memory (ROM), a magnetic disk, an optical disk and so on. Or when implemented in a form of a software functional module and sold or used as an independent product, the integrated units of the disclosure may be also stored in a computer-readable storage medium. Based on such an understanding, the technical solutions of the embodiments of the disclosure essentially, or the part contributing to the prior art of the technical solutions of the embodiments of the disclosure may be embodied in a form of a software product. The computer software product is stored in a storage medium, and includes several instructions for instructing a computer device (which may be a personal computer, a server, or a network device and so on) to perform all or part of the steps of the methods in the embodiments of the disclosure. The foregoing storage medium includes: any medium that can store program codes, such as a mobile storage device, an RAM, an ROM, a magnetic disk, an optical disk and so on.

## Claims

1. A Wideband Code Division Multiple Access, WCDMA, adjacent cell interference control method, comprising:
acquiring feature information of each User Equipment, UE, in a non-handover region of a target cell and a co-frequency adjacent cell of the target cell (201);
determining interference UEs of the target cell according to the feature information (202); and
transmitting control instructions to cells where the interference UEs locate to control power of the interference UEs (203);
wherein the acquiring the feature information of each UE in the non-handover region of the target cell and the co-frequency adjacent cell of the target cell comprises:
determining if the UEs are located in the non-handover region of the target cell and the co-frequency adjacent cell of the target cell according to a Channel Quality Indicator, CQI, in the co-frequency adjacent cell of the target cell; and
acquiring feature information of each UE determined to be located in the non-handover region of the target cell and the co-frequency adjacent cell of the target cell;
and/or,
determining if the UEs are located in the non-handover region of the target cell and the co-frequency adjacent cell of the target cell according to downlink signal strength information from the co-frequency adjacent cell of the target cell; and
acquiring feature information of each UE determined to be located in the non-handover region of the target cell and the co-frequency adjacent cell of the target cell;
wherein the feature information comprises an uplink scrambling code, a time slot format and/or UE identification information;
wherein the non-handover region of the target cell and the co-frequency adjacent cell of the target cell refers to a region between a boundary of uplink coverage and a boundary of downlink coverage of an adjacent cell besides a part overlapped with a downlink coverage region of the target cell.

2. The WCDMA adjacent cell interference control method according to claim 1, wherein the determining the interference UEs of the cell according to the feature information comprises:
acquiring uplink transmission power of each UE in the non-handover region of the target cell and the co-frequency adjacent cell of the target cell in the target cell according to the feature information, using the uplink transmission power of all UEs in the non-handover region of the target cell and the co-frequency adjacent cell of the target cell as interference power of the target cell, and determining all UEs in the non-handover region of the target cell and the co-frequency adjacent cell of the target cell as the interference UEs of the target cell;
or,
acquiring uplink transmission power of each UE in the non-handover region of the target cell and the co-frequency adjacent cell of the target cell in the target cell according to the feature information; determining uplink transmission power greater than a preset uplink transmission power threshold in the acquired uplink transmission power, and/or uplink transmission power of UEs having a pilot Signal to Interference Ratio, SIR, greater than a preset pilot SIR threshold in the target cell as interference power of the target cell; and determining UEs having the uplink transmission power greater than the preset uplink transmission power threshold, and/or UEs having the pilot SIR greater than the preset pilot SIR threshold in the target cell as the interference UEs of the target cell.

3. The WCDMA adjacent cell interference control method according to claim 2, wherein the transmitting the control instructions to the cells where the interference UEs locate to control the power of the interference UEs comprises:
when a current load of the target cell is greater than a preset load threshold, transmitting control instructions for reducing the uplink transmission power of the UEs to the cells where the interference UEs locate.

4. The WCDMA adjacent cell interference control method according to claim 3, wherein the control instructions for reducing the uplink transmission power of the UEs include at least one of instructions for reducing a Relative Grant, RG, of the UEs, instructions for reducing an absolute grant of the UEs and instructions for reducing an uplink data rate of the UEs.

5. A Wideband Code Division Multiple Access, WCDMA, system, the system comprising a Radio Network Controller, RNC, and a first base station;
the RNC is configured to acquire feature information of each User Equipment, UE, in a non-handover region of a target cell and a co-frequency adjacent cell of a target cell; and transmit the acquired feature information to the first base station; the target cell is a cell where the first base station locates;
the first base station is configured to determine interference UEs of the cell according to the feature information, and transmit control instructions to cells where the interference UEs locate to control power of the interference UEs;
wherein the RNC is further configured to determine if the UEs are located in the non-handover region of the target cell and the co-frequency adjacent cell of the target cell according to a Channel Quality Indicator, CQI, in the co-frequency adjacent cell of the target cell; and acquire feature information of each UE determined to be located in the non-handover region of the target cell and the co-frequency adjacent cell of the target cell;
and/or,
further configured to determine if the UEs are located in the non-handover region of the target cell and the co-frequency adjacent cell of the target cell according to downlink signal strength information from the co-frequency adjacent cell of the target cell; and acquire feature information of each UE determined to be located in the non-handover region of the target cell and the co-frequency adjacent cell of the target cell;
wherein the feature information comprises an uplink scrambling code, a time slot format and/or UE identification information;
wherein the non-handover region of the target cell and the co-frequency adjacent cell of the target cell refers to a region between a boundary of uplink coverage and a boundary of downlink coverage of an adjacent cell besides a part overlapped with a downlink coverage region of the target cell.

6. The WCDMA system according to claim 5, wherein
the first base station is further configured to acquire uplink transmission power of each UE in the non-handover region of the target cell and the co-frequency adjacent cell of the target cell in the target cell according to the feature information, use the uplink transmission power of all UEs as interference power of the cell, and determine all UEs in the non-handover region of the target cell and the co-frequency adjacent cell of the target cell as the interference UEs of the cell;
or, is configured to acquire uplink transmission power of each UE in the non-handover region of the target cell and the co-frequency adjacent cell of the target cell in the target cell according to the feature information; determine uplink transmission power greater than a preset uplink transmission power threshold in the acquired uplink transmission power, and/or uplink transmission power of UEs having a pilot Signal to Interference Ratio, SIR, greater than a preset pilot SIR threshold in the target cell as interference power of the target cell; and determine UEs having the uplink transmission power greater than the preset uplink transmission power threshold, and/or UEs having the pilot SIR greater than the preset pilot SIR threshold in the target cell as the interference UEs of the target cell.

7. The WCDMA system according to claim 6, wherein
the first base station is further configured, when a current load of the target cell is greater than a preset load threshold, to transmit a control instruction for reducing the uplink transmission power of the UEs to a second base station corresponding to the cells where the interference UEs locate.

8. The WCDMA system according to claim 7, wherein the control instruction for reducing the uplink transmission power of the UEs includes at least one of an instruction for reducing an Relative Grant, RG, of the UEs, an instruction for reducing an absolute grant of the UEs and an instruction for reducing an uplink data rate of the UEs.

9. A computer storage medium, wherein the computer storage medium stores a computer executable instruction and the computer executable instruction is used for executing the WCDMA adjacent cell interference control method according to any one of claims 1 to 4.

## Patentansprüche

1. Verfahren zum Steuern der Interferenz von Nachbarzellen mit Breitband-Codemultiplex-Vielfachzugriff, WCDMA, umfassend folgende Schritte:
Erfassen von Funktionsinformationen jedes Benutzergeräts, UE, in einer übergabefreien Region einer Zielzelle und einer zu der Zielzelle benachbarten Zelle auf dergleichen Frequenz (201);
Bestimmen von störenden UEs der Zielzelle gemäß den Funktionsinformationen (202); und
Senden von Steueranweisungen an Zellen, in denen sich die störenden UEs befinden, um die Leistung der störenden UEs (203) zu steuern;
wobei das Erfassen der Funktionsinformationen jedes UE in der übergabefreien Region der Zielzelle und der zu der Zielzelle benachbarten Zelle auf der gleichen Frequenz Folgendes umfasst:
Bestimmen, ob sich die UEs in der übergabefreien Region der Zielzelle und der zu der Zielzelle benachbarten Zelle auf der gleichen Frequenz befinden, gemäß eines Kanalqualitätsindikators, CQI, in der zu der Zielzelle benachbarten Zelle auf der gleichen Frequenz; und
Erfassen von Funktionsinformationen jedes UE, von dem bestimmt wird, dass es sich in der übergabefreien Region der Zielzelle und der zu der Zielzelle benachbarten Zelle auf der gleichen Frequenz befindet;
und/oder
Bestimmen, ob sich die UEs in der übergabefreien Region der Zielzelle und der zu der Zielzelle benachbarten Zelle auf der gleichen Frequenz befinden, gemäß Informationen über die Stärke des Abwärtsstreckensignals von der zu der Zielzelle benachbarten Zelle auf der gleichen Frequenz; und
Erfassen von Funktionsinformationen jedes UE, von dem bestimmt wird, dass es sich in der übergabefreien Region der Zielzelle und der zu der Zielzelle benachbarten Zelle auf der gleichen Frequenz befindet;
wobei die Funktionsinformationen einen Aufwärtsstrecken-Verwürfelungscode, ein Zeitschlitzformat und/oder UE-Identifizierungsinformationen umfassen;
wobei sich die übergabefreie Region der Zielzelle und der zu der Zielzelle benachbarten Zelle auf der gleichen Frequenz auf eine Region zwischen einer Grenze der Aufwärtsstrecken-Abdeckung und einer Grenze der Abwärtsstrecken-Abdeckung einer Nachbarzelle außer einem Teil, der mit einer Abwärtsstrecken-Abdeckungsregion der Zielzelle überlagert ist.

2. Verfahren zum Steuern der Interferenz von Nachbarzellen mit WCDMA nach Anspruch 1, wobei das Bestimmen der störenden UEs der Zelle gemäß den Funktionsinformationen folgende Schritte umfasst:
Erfassen der Aufwärtsstrecken-Sendeleistung jedes UE in der übergabefreien Region der Zielzelle und der zu der Zielzelle benachbarten Zelle auf der gleichen Frequenz in der Zielzelle gemäß den Funktionsinformationen unter Verwendung der Aufwärtsstrecken-Sendeleistung aller UEs in der übergabefreien Region der Zielzelle und der zu der Zielzelle benachbarten Zelle auf der gleichen Frequenz als Interferenzleistung der Zielzelle, und Bestimmen aller UEs in der übergabefreien Region der Zielzelle und der zu der Zielzelle benachbarten Zelle auf der gleichen Frequenz als die störenden UEs der Zielzelle;
oder
Erfassen der Aufwärtsstrecken-Sendeleistung jedes UE in der übergabefreien Region der Zielzelle und der zu der Zielzelle benachbarten Zelle auf der gleichen Frequenz in der Zielzelle gemäß den Funktionsinformationen; Bestimmen einer Aufwärtsstrecken-Sendeleistung, die größer als eine voreingestellte Schwelle der Aufwärtsstrecken-Sendeleistung in der erfassten Aufwärtsstrecken-Sendeleistung ist, und/oder einer Aufwärtsstrecken-Sendeleistung der UEs, die ein Pilot-Signal/Interferenz-Verhältnis, SIR, aufweisen, das größer als eine voreingestellte Schwelle des Pilot-SIR in der Zielzelle ist, als Interferenzleistung der Zielzelle; und Bestimmen der UEs, welche die Aufwärtsstrecken-Sendeleistung aufweisen, die größer als die voreingestellte Schwelle der Aufwärtsstrecken-Sendeleistung ist, und/oder der UEs, die das Pilot-SIR aufweisen, das größer als die voreingestellte Schwelle des Pilot-SIR in der Zielzelle ist, als die störenden UEs der Zielzelle.

3. Verfahren zum Steuern der Interferenz von Nachbarzellen mit WCDMA nach Anspruch 2, wobei das Senden der Steueranweisungen an die Zellen, in denen sich die störenden UEs befinden, um die Leistung der störenden UEs zu steuern, Folgendes umfasst:
wenn eine aktuelle Auslastung der Zielzelle größer als eine voreingestellte Auslastungsschwelle ist, Senden von Steueranweisungen zum Reduzieren der Aufwärtsstrecken-Sendeleistung der UEs an die Zellen, in denen sich die störenden UEs befinden.

4. Verfahren zum Steuern der Interferenz von Nachbarzellen mit WCDMA nach Anspruch 3, wobei die Steueranweisungen zum Reduzieren der Aufwärtsstrecken-Sendeleistung der UEs mindestens eines von Anweisungen zum Reduzieren einer relativen Berechtigung, RG, der UEs, von Anweisungen zum Reduzieren einer absoluten Berechtigung der UEs und von Anweisungen zum Reduzieren einer Aufwärtsstrecken-Datenübertragungsgeschwindigkeit der UEs umfassen.

5. System zum Steuern der Interferenz von Nachbarzellen mit Breitband-Codemultiplex-Vielfachzugriff, WCDMA, wobei
das System einen Funknetz-Controller, RNC, und eine erste Basisstation umfasst;
der RNC konfiguriert ist, um Funktionsinformationen jedes Benutzergeräts, UE, in einer übergabefreien Region einer Zielzelle und einer zu der Zielzelle benachbarten Zelle auf der gleichen Frequenz zu erfassen; und um die erfassten Funktionsinformationen an die erste Basisstation zu senden; wobei die Zielzelle eine Zelle ist, in der sich die erste Basisstation befindet;
die erste Basisstation konfiguriert ist, um störende UEs der Zelle gemäß den Funktionsinformationen zu bestimmen, und um Steueranweisungen an Zellen, in denen sich die störenden UEs befinden, zu senden, um die Leistung der störenden UEs zu steuern;
wobei der RNC ferner konfiguriert ist, um zu bestimmen, ob sich die UEs in der übergabefreien Region der Zielzelle und der zu der Zielzelle benachbarten Zelle auf der gleichen Frequenz befinden, gemäß einem Kanalqualitätsindikator, CQI, in der zu der Zielzelle benachbarten Zelle auf der gleichen Frequenz; und um Funktionsinformationen jedes UE zu erfassen, von dem bestimmt wird, dass es sich in der übergabefreien Region der Zielzelle und der zu der Zielzelle benachbarten Zelle auf der gleichen Frequenz befindet;
und/oder
ferner konfiguriert ist, um zu bestimmen, ob sich die UEs in der übergabefreien Region der Zielzelle und der zu der Zielzelle benachbarten Zelle auf der gleichen Frequenz befinden, gemäß Informationen bezüglich der Stärke des Abwärtsstreckensignals, von der zu der Zielzelle benachbarten Zelle auf der gleichen Frequenz; und um Funktionsinformationen jedes UE zu erfassen, von dem bestimmt wird, dass es sich in der übergabefreien Region der Zielzelle und der zu der Zielzelle benachbarten Zelle auf der gleichen Frequenz befindet;
wobei die Funktionsinformationen einen Aufwärtsstrecken-Verwürfelungscode, ein Zeitschlitzformat und/oder UE-Identifizierungsinformationen umfassen;
wobei sich die übergabefreie Region der Zielzelle und der zu der Zielzelle benachbarten Zelle auf der gleichen Frequenz auf eine Region zwischen einer Grenze einer Aufwärtsstrecken-Abdeckung und einer Grenze einer Abwärtsstrecken-Abdeckung einer Nachbarzelle außer einem Teil, der mit einer Abwärtsstrecken-Abdeckungsregion der Zielzelle überlagert ist, bezieht.

6. WCDMA-System nach Anspruch 5, wobei
die erste Basisstation ferner konfiguriert ist, um die Aufwärtsstrecken-Sendeleistung jedes UE in der übergabefreien Region der Zielzelle und der zu der Zielzelle benachbarten Zelle auf der gleichen Frequenz in der Zielzelle gemäß den Funktionsinformationen zu erfassen, um die Aufwärtsstrecken-Sendeleistung aller UEs als Interferenzleistung der Zelle zu verwenden, und um alle UEs in der übergabefreien Region der Zielzelle und der zu der Zielzelle benachbarten Zelle auf der gleichen Frequenz als die störenden UEs der Zelle zu bestimmen;
oder
konfiguriert ist, um eine Aufwärtsstrecken-Sendeleistung jedes UE in der übergabefreien Region der Zielzelle und der zu der Zielzelle benachbarten Zelle auf der gleichen Frequenz in der Zielzelle gemäß den Funktionsinformationen zu erfassen; um die Aufwärtsstrecken-Sendeleistung, die größer ist als eine voreingestellte Schwelle der Aufwärtsstrecken-Sendeleistung in der erfassten Aufwärtsstrecken-Sendeleistung ist, und/oder eine Aufwärtsstrecken-Sendeleistung der UEs, die ein Pilot-Signal/Interferenz-Verhältnis, SIR, aufweisen, das größer als eine voreingestellte Schwelle des Pilot-SIR in der Zielzelle ist, als Interferenzleistung der Zielzelle zu bestimmen; und um UEs, welche die Aufwärtsstrecken-Sendeleistung aufweisen, die größer als die voreingestellte Schwelle der Aufwärtsstrecken-Sendeleistung ist, und/oder UEs, die das Pilot-SIR aufweisen, das größer als die voreingestellte Schwelle des Pilot-SIR in der Zielzelle ist, als die störenden UEs der Zielzelle zu bestimmen.

7. WCDMA-System nach Anspruch 6, wobei die erste Basisstation ferner konfiguriert ist, wenn eine aktuelle Auslastung der Zielzelle größer als eine voreingestellte Belastungsschwelle ist, um eine Steueranweisung zum Reduzieren der Aufwärtsstrecken-Sendeleistung der UEs an eine zweite Basisstation, die den Zellen entspricht, in denen sich die störenden UEs befinden, zu senden.

8. WCDMA-System nach Anspruch 7, wobei die Steueranweisung zum Reduzieren der Aufwärtsstrecken-Sendeleistung der UEs mindestens eine von einer Anweisung zum Reduzieren einer relativen Berechtigung, RG, der UEs, einer Anweisung zum Reduzieren einer absoluten Berechtigung der UEs und einer Anweisung zum Reduzieren einer Aufwärtsstrecken-Datenübertragungsgeschwindigkeit der UEs umfasst.

9. Computerspeichermedium, wobei das Computerspeichermedium eine computerausführbare Anweisung speichert, und die computerausführbare Anweisung verwendet wird, um das Verfahren zum Steuern der Interferenz von Nachbarzellen mit WCDMA nach einem der Ansprüche 1 bis 4 auszuführen.

## Revendications

1. Procédé de régulation d'interférence de cellules adjacentes à accès multiple par répartition de codes à large bande, WCDMA, comprenant les étapes consistant à :
acquérir des informations de caractéristiques de chaque équipement utilisateur, UE, dans une région sans transfert d'une cellule cible et d'une cellule de même fréquence adjacente à la cellule cible (201);
déterminer des UE parasites de la cellule cible selon les informations de caractéristiques (202) ; et
transmettre des instructions de régulation à des cellules où se trouvent les UE parasites pour réguler la puissance des UE parasites (203) ;
l'acquisition des informations de caractéristiques de chaque UE dans la région sans transfert de la cellule cible et de la cellule de même fréquence adjacente à la cellule cible comprenant les étapes consistant à :
déterminer si les UE se trouvent dans la région sans transfert de la cellule cible et de la cellule de même fréquence adjacente à la cellule cible selon un indicateur de qualité de canal, CQI, dans la cellule de même fréquence adjacente à la cellule cible ; et
acquérir des informations de caractéristiques de chaque UE dont il est déterminé qu'il se trouve dans la région sans transfert de la cellule cible et de la cellule de même fréquence adjacente à la cellule cible ;
et/ou,
déterminer si les UE se trouvent dans la région sans transfert de la cellule cible et de la cellule de même fréquence adjacente à la cellule cible selon des informations sur la force du signal de liaison descendante provenant de la cellule de même fréquence adjacente à la cellule cible; et
acquérir des informations de caractéristiques de chaque UE dont il est déterminé qu'il se trouve dans la région sans transfert de la cellule cible et de la cellule de même fréquence adjacente à la cellule cible,
les informations de caractéristiques comprenant un code de brouillage de liaison montante, un format de créneau temporel et/ou des informations d'identification d'UE ;
la région sans transfert de la cellule cible et de la cellule de même fréquence adjacente à la cellule cible se référant à une région entre une limite de couverture de liaison montante et une limite de couverture de liaison descendante d'une cellule adjacente en dehors d'une partie empiétant sur une région de couverture de liaison descendante de la cellule cible.

2. Procédé WCDMA de régulation d'interférence de cellules adjacentes selon la revendication 1, dans lequel la détermination des UE parasites de la cellule selon les informations de caractéristiques comprend les étapes consistant à :
acquérir la puissance de transmission de liaison montante de chaque UE dans la région sans transfert de la cellule cible et de la cellule de même fréquence adjacente à la cellule cible dans la cellule cible selon les informations de caractéristiques, en utilisant la puissance de transmission de liaison montante de tous les UE dans la région sans transfert de la cellule cible et de la cellule de même fréquence adjacente à la cellule cible comme une puissance d'interférence de la cellule cible, et déterminer tous les UE dans la région sans transfert de la cellule cible et de la cellule de même fréquence adjacente à la cellule cible comme les UE parasites de la cellule cible ;
ou
acquérir la puissance de transmission de liaison montante de chaque UE dans la région sans transfert de la cellule cible et de la cellule de même fréquence adjacente à la cellule cible dans la cellule cible selon the informations de caractéristiques ; déterminer une puissance de transmission de liaison montante supérieure à un seuil préréglé de la puissance de transmission de liaison montante dans la puissance de transmission de liaison montante acquise, et/ou une puissance de transmission de liaison montante des UE présentant un rapport signal/interférence, SIR, pilote supérieur à un seuil préréglé du SIR pilote dans la cellule cible comme la puissance d'interférence de la cellule cible ; et déterminer les UE présentant la puissance de transmission de liaison montante supérieure au seuil préréglé de la puissance de transmission de liaison montante et/ou les UE présentant le SIR pilote supérieur au seuil préréglé du SIR pilote dans la cellule cible comme les UE parasites de la cellule cible.

3. Procédé WCDMA de régulation d'interférence de cellules adjacentes selon la revendication 2, dans lequel la transmission des instructions de régulation aux cellules où se trouvent les UE parasites pour réguler la puissance des UE parasites comprend :
lorsqu'une charge actuelle de la cellule cible est supérieure à un seuil de charge préréglé, le fait de transmettre des instructions de régulation pour réduire la puissance de transmission de liaison montante des UE aux cellules où se trouvent les UE parasites.

4. Procédé WCDMA de régulation d'interférence de cellules adjacentes selon la revendication 3, dans lequel les instructions de régulation pour réduire la puissance de transmission de liaison montante des UE comprennent au moins l'une des instructions pour réduire une autorisation relative, RG, des UE, des instructions pour réduire une autorisation absolue des UE et des instructions pour réduire une vitesse de transmission de données de voie montante des UE.

5. Système de régulation d'interférence de cellules adjacentes à accès multiple par répartition de codes à large bande, WCDMA, le système comprenant un contrôleur de réseau radio, RNC, et une première station de base ;
le RNC est configuré pour acquérir des informations de caractéristiques de chaque équipement utilisateur, UE, dans une région sans transfert d'une cellule cible et d'une cellule de même fréquence adjacente à la cellule cible ; et pour transmettre les informations de caractéristiques acquises à la première station de base ; la cellule cible étant une cellule où se trouve la première station de base ;
la première station de base est configurée pour déterminer des UE parasites de la cellule selon les informations de caractéristiques, et pour transmettre des instructions de régulation à des cellules où se trouvent les UE parasites pour réguler la puissance des UE parasites ;
le RNC étant en outre configuré pour déterminer si les UE se trouvent dans la région sans transfert de la cellule cible et de la cellule de même fréquence adjacente à la cellule cible selon un indicateur de qualité de canal, CQI, dans la cellule de même fréquence adjacente à la cellule cible ; et pour acquérir des informations de caractéristiques de chaque UE dont il est déterminé qu'il se trouve dans la région sans transfert de la cellule cible et de la cellule de même fréquence adjacente à la cellule cible ;
et/ou
étant en outre configuré pour déterminer si les UE se trouvent dans la région sans transfert de la cellule cible et de la cellule de même fréquence adjacente à la cellule cible selon des informations sur la force du signal de liaison descendante provenant de la cellule de même fréquence adjacente à la cellule cible ; et pour acquérir des informations de caractéristiques de chaque UE dont il est déterminé qu'il se trouve dans la région sans transfert de la cellule cible et de la cellule de même fréquence adjacente à la cellule cible ;
les informations de caractéristiques comprenant un code de brouillage de liaison montante, un format de créneau temporel et/ou des informations d'identification d'UE ;
la région sans transfert de la cellule cible et de la cellule de même fréquence adjacente à la cellule cible se référant à une région entre une limite de couverture de liaison montante et une limite de couverture de liaison descendante d'une cellule adjacente en dehors d'une partie qui empiète sur une région de couverture de liaison descendante de la cellule cible.

6. Système WCDMA selon la revendication 5, dans lequel
la première station de base est en outre configurée pour acquérir la puissance de transmission de liaison montante de chaque UE dans la région sans transfert de la cellule cible et de la cellule de même fréquence adjacente à la cellule cible dans la cellule cible selon les informations de caractéristiques, pour utiliser la puissance de transmission de liaison montante de tous les UE comme une puissance d'interférence de la cellule, et pour déterminer tous les UE dans la région sans transfert de la cellule cible et de la cellule de même fréquence adjacente à la cellule cible comme les UE parasites de la cellule ;
ou configurée pour acquérir la puissance de transmission de liaison montante de chaque UE dans la région sans transfert de la cellule cible et de la cellule de même fréquence adjacente à la cellule cible dans la cellule cible selon les informations de caractéristiques ; pour déterminer une puissance de transmission de liaison montante supérieure à un seuil préréglé de la puissance de transmission de liaison montante dans la puissance de transmission de liaison montante acquise, et/ou une puissance de transmission de liaison montante des UE présentant un rapport signal/interférence, SIR, pilote supérieur à un seuil préréglé du SIR pilote dans la cellule cible comme la puissance d'interférence de la cellule cible ; et pour déterminer des UE présentant la puissance de transmission de liaison montante supérieure au seuil préréglé de la puissance de transmission de liaison montante, et/ou des UE présentant le SIR pilote supérieur au seuil préréglé du SIR pilote dans la cellule cible comme les UE parasites de la cellule cible.

7. Système WCDMA selon la revendication 6, dans lequel la première station de base est en outre configurée, lorsqu'une charge actuelle de la cellule cible est supérieure à un seuil de charge préréglé, pour transmettre une instruction de régulation pour réduire la puissance de transmission de liaison montante des UE à une deuxième station de base correspondant aux cellules où se trouvent les UE parasites.

8. Système WCDMA selon la revendication 7, dans lequel l'instruction de régulation pour réduire la puissance de transmission de liaison montante des UE comprend au moins l'une d'une instruction pour réduire une autorisation relative, RG, des UE, d'une instruction pour réduire une autorisation absolue des UE et d'une instruction pour réduire une vitesse de transmission de données de voie montante des UE.

9. Support de stockage informatique, dans lequel le support de stockage informatique stocke une instruction exécutable par ordinateur et l'instruction exécutable par ordinateur est utilisée pour exécuter le procédé WCDMA de régulation d'interférence de cellules adjacentes selon l'une quelconque des revendications 1 à 4.
